# EUROPÄISCHE PATENTSCHRIFT

(11) **EP 1 847 814 B1**
(45) Veröffentlichungstag und Bekanntmachung des Hinweises auf die Patenterteilung: **24.09.2014**
(21) Anmeldenummer: 07007761.5
(22) Anmeldetag: 17.04.2007
(51) Int. Cl.: G01F 3/10, G01F 15/18

(54) **Messeinrichtung zur volumetrischen Messung einer Flüssigkeit**
Measurement device for volumetric measurement of a liquid
Dispositif de mesure destiné à la mesure volumétrique d'un liquide

(30) Priorität: 19.04.2006 DE 102006018231
(43) Veröffentlichungstag der Anmeldung: 24.10.2007
(73) Patentinhaber: Bopp & Reuther Messtechnik Gmbh, 67346 Speyer (DE)
(72) Erfinder: Cuny, Francois, 55400 Hermeville (FR); Last, Walter, 69254 Malsch (DE); Schaefer, Monika, 68647 Biblis (DE); Zur Nedden, Joachim, 68775 Ketsch (DE); Vock, Dieter, 68305 Mannheim (DE)
(74) Vertreter: Lenz, Steffen

(56) Entgegenhaltungen:
- GB-A- 1 190 524
- US-A- 2 835 229
- US-A- 4 084 926

## Beschreibung

Die Erfindung betrifft eine Messeinrichtung zur volumetrischen Messung einer fließenden Flüssigkeit nach dem Oberbegriff des Anspruchs 1.

Die Erfindung bezieht sich folglich auf eine Messeinrichtung, mittels derer das durchlaufende Volumen einer fließenden Flüssigkeit unmittelbar gemessen wird, insbesondere ohne dass es hierbei auf das (zeitliche) Strömungsprofil ankommt .

Zur Versorgung von Abnehmern mit Prozessflüssigkeiten, insbesondere brennbaren Flüssigkeiten, wie Mineralölen, Benzin oder dergleichen, müssen Tankfahrzeuge mit zuverlässig arbeitenden Vorrichtungen zur Volumenerfassung der gelieferten Flüssigkeit versehen sein.

Die GB 1 190 524 A offenbart eine rotierende Durchflussmesseinrichtung mit einem Gehäuse mit einem Einlass und einem Auslass für eine Flüssigkeit, und einem sichelförmig ausgebildeten Teil innerhalb des Gehäuses, wobei dieses Teil mit dem Gehäuse einen ringförmige Kavität bildet, welcher mit dem Ein- und Auslass in einem endlichen Winkel in Verbindung steht. Die US 2 835 229 A beschreibt eine weitere derartige Vorrichtung mit in einem Gehäuse laufenden Messrades, wobei eine Flüssigkeit mittels des Messrades von einem Einlass zu einem Auslass gefördert wird. Die US 4 084 926 A offenbart eine Vorrichtung zur volumetrischen Förderung, die als Rotationspumpe mit zwei exzentrisch angeordneten Zahnrädern unterschiedlicher Größe ausgebildet ist. Derartige Vorrichtungen bestehen in der Regel aus einer Mehrzahl von Einheiten, nämlich einer eigentlichen Volumen-Durchflussmesseinrichtung mit einer mindestens ein Messrad aufweisenden Messeinheit und einem dem mindestens einen Messrad zugeordneten Sensor, dem separat eine Mess- oder Auswerteelektronik zugeordnet ist zur eigentlichen Bestimmung der Abgabemenge. Damit die Volumendurchflussmessung zuverlässig nur die zur Versorgung vorgesehene Flüssigkeit erfasst, ist der Messeinrichtung in der Regel ein Gasmessverhüter mit einem integrierten Filtereinsatz und einem Schwimmer vorgeordnet. Weiterhin ist zumindest eine Ventilanordnung mit mehreren Ventilen vorgesehen, um den Fluss der Flüssigkeit in geeigneter Weise zu steuern bzw. zuzulassen oder abzusperren.

In der Regel werden sämtliche vorstehend beschriebenen Einheiten getrennt voneinander in einem sie tragenden Rahmen eines Fahrzeugs, wie eines Versorgungs- bzw. Tankfahrzeugs, angeordnet. Die einzelnen Einheiten werden dann durch Fluidleitungen und elektrische Verbindungskabel miteinander verbunden. In Einzelfällen wurde schon vorgesehen, den Gasmessverhüter oder aber die Elektronik in irgend einer Weise mit der eigentlichen Messeinrichtung mechanisch zu verbinden. In jedem Falle wurden jedoch die Ventile als völlig getrennte Elemente in derartigen Tankfahrzeugen installiert, insbesondere als voneinander unabhängige einzelne Elemente, die lediglich durch separate Leitungen miteinander verbunden sind.

Darüber hinaus war der Platzbedarf der eigentlichen Durchflussmesseinrichtung unter Berücksichtung ihrer Einlassund Auslassleitungen und den diesen zugeordneten weiteren Einrichtungen (vor Einlass Gasmessverhüter, hinter Auslass Ventile) erheblich; dies gilt insbesondere für mit zwei Messrädern ausgestattete Messeinrichtungen aufgrund der Anund Zuordnung von Einlass und Auslass zu der die beiden Messräder aufweisenden Durchflussmesskammer, insbesondere in linearer Anordnung.

Die Verbindung mit weiteren Teilen einer vollständigen Vorrichtung zur Durchflussmessung, wie eben notwendigerweise vorzusehenden Ventilen und einem Gasmessverhüter - die selbst nicht dargestellt sind - erfolgt üblicherweise über Verrohrungen. Hierüber schweigen sich alle drei Druckschriften aus. Dies ist aus den oben genannten Gründen nachteilig, da zum einen eine vollständige Vorrichtung ausladend ist und einen erheblichen Platz einnimmt und darüber hinaus Manipulationsmöglichkeiten eröffnet.

Der Erfindung liegt die Aufgabe zugrunde, eine gattungsgemäße Vorrichtung zu schaffen, die unter Vermeidung der genannten Nachteile einen kompletten Aufbau ermöglicht und damit Platz sparend ausgebildet ist, bei der der Installationsaufwand verringert wird und bei Täuschungsgefahren der Durchflusserfassung vermindert ist.

Erfindungsgemäß wird die genannte Aufgabe mit einer Einrichtung der eingangs erstgenannten Art gelöst, die die kennzeichnenden Merkmale des Anspruchs 1 aufweist.

Während bisher bei Messeinrichtungen zur volumetrischen Durchflussmessung Einlass und Auslass zur Messeinheit fluchteten oder zumindest parallel zueinander angeordnet waren, wird durch die erfindungsgemäße Ausgestaltung der Ausrichtung von Einlass und/oder Auslass, in bevorzugter Ausführung zwischen 30° und 150° , insbesondere zwischen 60° und 120° , vorzugsweise zwischen 80° und 100° , z.B. etwa 90° , die Voraussetzung für eine kompaktere Ausgestaltung einer entsprechenden Volumendurchflussmessvorrichtung endlichen Winkel ungleich 90° zu einer Außenwandung angeordnet ist. Die Messeinheit kann in letztgenanntem Fall Messräder in Form von Ovalrädern besitzen, die insbesondere miteinander kämmen. Grundsätzlich können indess auch beliebig andere, zur Volumenmessung geeignete Messeinheiten zum Einsatz kommen, wie Treib-, Schieberzähler, Ringkolbenzähler etc.

In bevorzugter Ausgestaltung ist dabei vorgesehen, dass die Verbindungslinie der beiden Messräder unter einem Winkel zwischen 30° und 60°, vorzugsweise zwischen 40° und 50°, z.B. etwa 45° , zum Einlass und/oder Auslass ausgerichtet ist. Vorzugsweise ist die Verbindungslinie zweier Messräder auch unter endlichen Winkeln ungleich 90° zur Seitenwandung des Gehäuses ausgerichtet, wobei bei einer quaderförmigen Ausgestaltung die Ausrichtung der Verbindungslinie der beiden Messräder vorzugsweise entsprechend einer Diagonalen gegeben ist.

Ein zur Messeinheit führender Einlass und ein von dieser fortführende Auslass sind vorzugsweise unter 90° zueinander ausgerichtet. Hierbei kann in Weiterbildung vorgesehen sein, dass die Einrichtung mindestens zwei im rechten Winkel zueinander stehenden Seitenflächen aufweist, wobei dann insbesondere Einlass und Auslass, vorzugsweise senkrecht, in jeweils eine Seitenfläche des Gehäuses münden.

Durch die Ausgestaltung der erfindungsgemäßen Messeinrichtung mit unter endlichem Winkel, insbesondere größer 0 und kleiner 180° , zueinander stehenden Seitenflächen ergibt sich in bevorzugter Weiterbildung, dass unmittelbar am Gehäuse der Volumendurchflussmesseinrichtung auf einer Anflanschfläche, die von einer solchen Seitenfläche definiert ist, Sensoren und Widerstandsthermometer und/oder Steuerungseinheiten zur Steuerung einer oder mehrerer Komponenten, auf einer anderen Anflanschfläche der Gasmessverhüter, auf einer anderen Anflanschfläche der ventilblock und in einer weiteren Seitenfläche Sensoren und Widerstandsthermometer anordbar sind. Zum Anschluss des Gasmessverhüters sieht eine Weiterbildung vor, dass das Gehäuse der Durchflussmesseinrichtung mit einer kreisförmigen Flanschplatte - gegebenenfalls lösbar - versehen ist, die eine Bodenplatte eines Gehäuses eines Gasmessverhüters bildet und auf der eine im Wesentlichen zylindrische Deckkappe des Gasmessverhüters befestigt ist, wobei insbesondere die Deckkappe auf der Flanschplatte mittels Schrauben dicht befestigt ist. In gleicher Weise kann vorgesehen sein, dass ein Siebfilter im Gasmessverhüter dicht gegen die Flanschplatte gedrückt gehalten ist. In weiterer Ausbildung ist vorgesehen, dass der Gasmessverhüter einen in einer Flanschplatte der Durchflussmesseinrichtung gehaltene Schwimmereinrichtung aufweist.

Zum optimalen Anschluss des ventilblocks an der Durchflussmesseinrichtung sieht eine Weiterbildung vor, dass ein Ventilblock am Gehäuse der Messeinrichtung befestigt ist, wobei insbesondere der Ventilblock vollständig von ihm zerstörungsfrei lösbare Ventileinheiten trägt, da die Ventileinheiten mittels Schrauben an einer Abdeckplatte des Ventilblocks lösbar befestigt sind.

Die Erfindung betrifft schließlich auch die Verwendung einer Vorrichtung der vorgenannten Art für versorgungsfahrzeuge, insbesondere in Form von Tankfahrzeugen, sowie ein mit einer solchen Vorrichtung ausgestattetes Versorgungs- bzw. Tankfahrzeug.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:

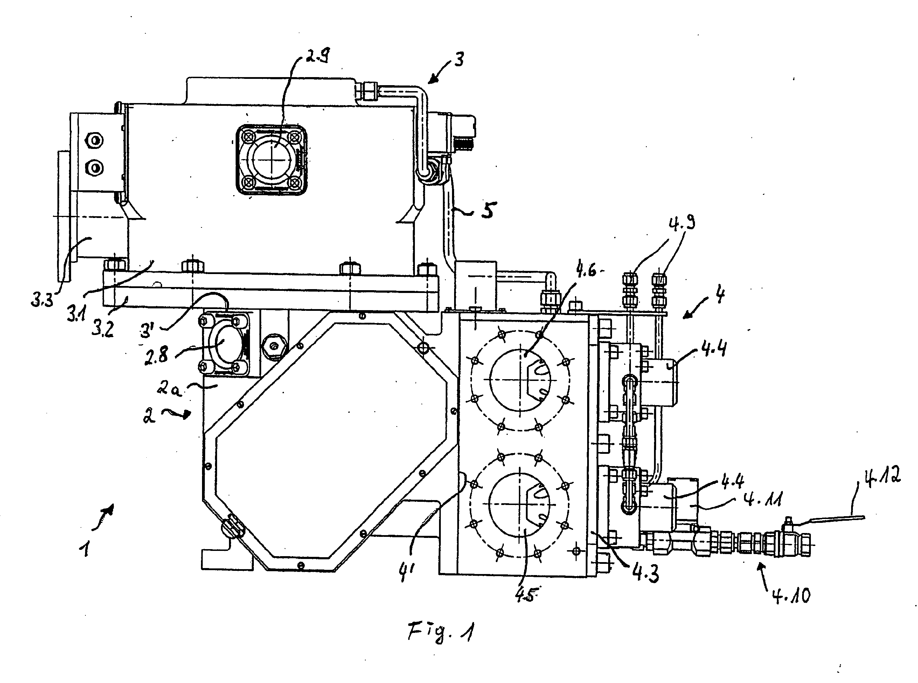

- Fig. 1: eine Seitenansicht einer Ausführungsform einer erfindängsgemäßen Vorrichtung;

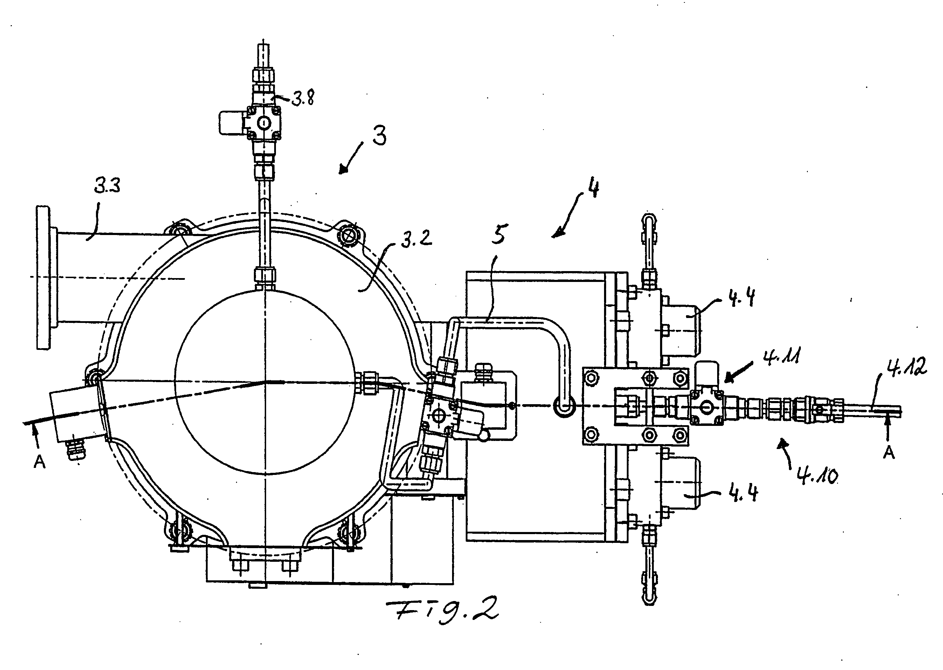

- Fig. 2: eine Draufsicht auf die Ausführungsform entsprechend dem Pfeil A der Fig. 1; und
- Fig. 3: einen Schnitt durch die Ausführungsform einer erfindungsgemäße Vorrichtung.

Die erfindungsgemäße Messvorrichtung 1 weist im Wesentlichen drei einzelne Einrichtungen auf: einen Volumen-Durchflussmesser 2, einen Gasmessverhüter 3 und einen Ventilblock 4.

Die Volumen-Durchflussmesseinrichtung 2 weist ein im Wesentlichen quaderförmiges Gehäuse 2a mit senkrecht zueinander ausgerichteten Anflanschflächen 3',4' zum Anflanschen der vorgenannten Komponenten Gasmessverhüter 3 und Ventilblock 4 am Gehäuse 2a der Volumendurchflussmesseinrichtung 2 auf.

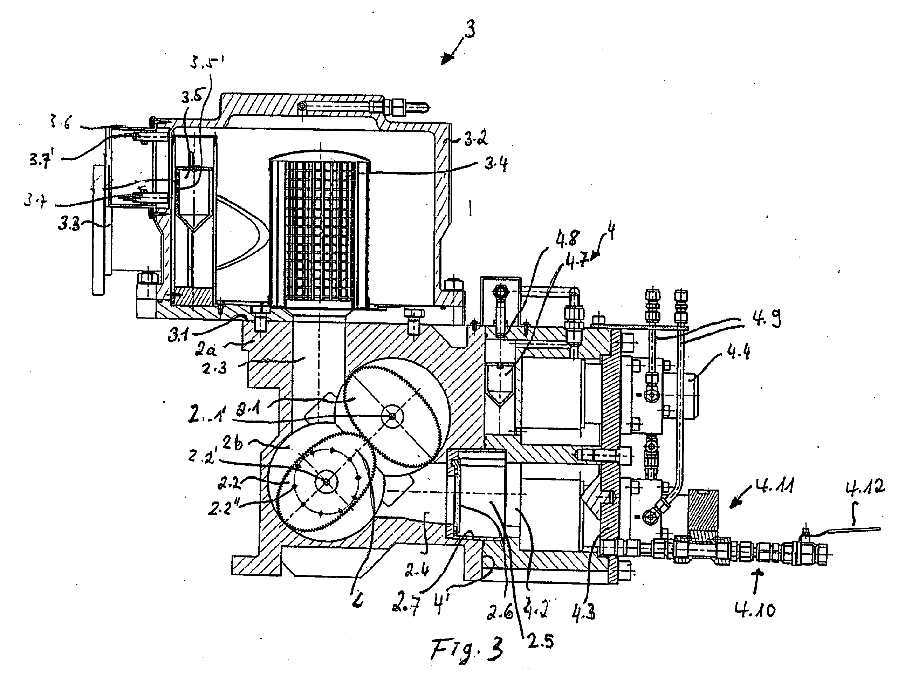

Im Inneren der Volumendurchflussmesseinrichtung 2 (Fig. 3) finden sich im dargestellten Ausführungsbeispiel eine Messeinheit (Messkammer) mit zwei Messrädern 2.1 und 2.2 in Form von Ovalrädern, deren Drehwellen senkrecht zu den Normalen der Flanschflächen 3', 4' für den Gasmessverhüter 3 und den Ventilblock 4 ausgerichtet sind. Auf einem der Messräder 2.1, 2.2 befinden sich Geberelemente, beispielsweise in Form von Magneten oder ferromagnetischen Elementen 2.2", denen geeignete Sensorelemente zugeordnet sind (nicht dargestellt), mittels derer die Umdrehungen der Ovalräder 2.1, 2.2 gemessen wird.

Bei zwei Messrädern 2.1, 2.2 liegt - wie aus Fig. 3 ersichtlich - die gedachte Verbindungslinie L zwischen den beiden Wellen 2.1' und 2.2' unter einem endlichen Winkel ungleich 90° zu den Flanschflächen 3', 4' (und damit auch zu deren Flächennormalen), insbesondere im Wesentlichen diagonal in der Volumendurchflussmesseinrichtung 2 (Fig. 3). Insbesondere die beiden Flanschflächen 3' für den Gasmessverhüter 3 und 4' für den Ventilblock 4 sind, wie im dargestellten Ausführungsbeispiel dargestellt, rechtwinklig zueinander angeordnet.

Eine Messeinheit ist in einer Abdeckplatte 2.5 des Volumen-Durchflussmessers 2 mit einer achtkantigen Außenkontur angeordnet. Die Messeinheit ist mit einer adäquaten Auswerte-und Steuerungselektronik versehen.

Im Gehäuse 2a der Volumen-Durchflussmesseinrichtung 2 ist eine von außen zugängliche in den Förderweg der Flüssigkeit ragende Tauchhülse 2.8 angeordnet; über diese kann eine eichtechnische Überprüfung eines in der Einrichtung vorgesehenen Temperaturfühlers vorgenommen werden.

Die Flanschfläche 3' ist am Gehäuse 2a der Durchflussmesseinrichtung ausgebildet. Mit ihr ist eine Bodenplatte 3.1 des Gehäuses des Gasmessverhüters 3 verbunden, der weiterhin eine im Wesentlichen zylindrische Deckkappe 3.2 aufweist, die mit einem im Wesentlichen tangential in sie mündenden Anschlussstutzen 3.3 versehen ist. Die Deckkappe 3.2 ist mittels Schrauben an der Bodenplatte 3.1 befestigt.

Der Gasmessverhüter 3 weist weiterhin einen Siebkorbfiltereinsatz 3.4 innerhalb der Deckkappe 3.2 sowie einen Schwimmer 3.5 auf (Fig. 3). Der Schwimmer 3.5 trägt seitlich mehrere Magnete 3.5'. Diesen sind außenseitig zwei übereinander angeordnete Sensoren 3.6, 3.7 zugeordnet, mittels derer festgestellt werden kann, in welcher Position der Schwimmer 3.5 sich befindet, ob in einer oberen Position, die anzeigt, dass der Gasmessverhüter mit Flüssigkeit gefüllt ist, so dass nicht die Gefahr einer Förderung von Gas und einer Messung von gefördertem Gas besteht, oder in einer Position - wie in Fig. 3 dargestellt -, in der der Schwimmer 3.5 gegenüber der vorher beschriebenen Position abgesenkt ist, was auf Anwesenheit von Gas im Gasmessverhüter hindeutet, woraufhin die automatische Entlüftung aktiviert wird.

Ein Einlass 2.3 von dem Gasmessverhüter 3 zu der Messeinheit 2b und ein Auslass 2.4 von der Messeinheit 2b zum Ventilblock 4 sind (mit ihren Symmetrieachsen) senkrecht zueinander ausgerichtet - und auch senkrecht an den Wellen der Ovalräder. Der Einlass 2.3 und der Auslass 2.4 münden in Flanschflächen 3' und 4' zum Gasmessverhüter 3 bzw. Ventilblock 4 der Volumendurchflussmesseinrichtung 2.

In einer sich an den Auslass 2.4 anschließenden erweiterten Ausnehmung 2.5 ist eine Rückschlagkappe 2.6 angeordnet. An diese schließt sich ein Einlasskanal 4.2 des Ventilblocks 4 an.

Der ventilblock 4 ist mit der volumendurchfluss-Messeinrichtung 2 verbunden.

Auf der der Volumen-Durchflussmesseinrichtung 2 abgewandten Seite des Ventilblocks 4 sind dessen Kanäle mittels einem Ventilblockdeckel 4.3 abgedeckt. Dieser weist Durchbrüche zur Aufnahme von maximal vier vollständigen Ventileinheiten 4.4 auf. Im dargestellten Ausführungsbeispiel sind drei Ventileinheiten 4.4 dargestellt.

Die Flüssigkeit wird über verschiedene Auslässe 4.5, 4.6 über dort anzuschließende Leitungen (nicht dargestellt) fortgeführt.

Auch der Ventilblock 4 weist einen Schwimmer 4.7 mit einem zugeordneten Sensor 4.8 zur Detektion der Anwesenheit von Flüssigkeit im Ventilblock 4 auf.

Weiterhin ist eine Entlüftungsleitung 5 vom Ventilblock 4 zum Gasmessverhüter 2 geführt. Zum Ventilblock 4 führen pneumatische Leitungen 4.9 für die in diesen befindlichen Ventileinheiten 4.4. Ferner ist eine Entleerungsanlage 4.10 mit Magnetventil 4.11 und von Hand betätigbarem Absperrhahn 4.32 vorgesehen.

### Bezugszeichenliste

- 1: Messvorrichtung
- 2: Volumendurchflussmesseinrichtung
- 2a: Gehäuse
- 2.1, 2.2: Messräder
- 2.1', 2.2': Wellen
- 2.2": ferromagnetische Elemente
- 2.3: Einlasskanal
- 2.4: Auslasskanal
- 2.5: Ausnehmung
- 2.7: Rückschlagkappeneinheit
- 2.6: Rückschlagkappe
- 2.8: Tauchhülse
- 3: Gasmessverhüter
- 3': Flanschfläche
- 3.1: Bodenplatte
- 3.2: Deckkappe
- 3.3: Anschlussstutzen
- 3.4: Siebkorbfilter
- 3.5: Schwimmer
- 3.6: Magnetmesseinrichtung
- 3.7, 3.7': Anschlüsse
- 4: Ventilblock
- 4': Flanschfläche
- 4.2: abnehmbares Deckteil
- 4.3: Ventilblockdeckel
- 4.4: Ventileinheiten
- 4.5: Auslass
- 4.6: Auslass
- 4.7: Schwimmer
- 4.8: Sensor
- 4.9: pneumatische Leitungen
- 4.10: Entleerungsanlage
- 4.11: Magnetventil
- 4.12: Absperrhahn
- 5: Entlüftungsleitung
- L: Verbindungslinie

## Patentansprüche

1. Vorrichtung zur volumetrischen Messung einer fließenden Flüssigkeit mit einer ein Gehäuse (2a) aufweisenden volumetrischen Durchflussmesseinrichtung (2), **dadurch gekennzeichnet,**
- **dass** das Gehäuse (2a) mindestens drei unter endlichen Winkeln zueinander ausgerichtete Anflanschflächen für weitere Einrichtungen der volumetrischen Durchflussmesseinrichtung aufweist und
- **dass** unmittelbar am Gehäuse der volumetrischen Durchflussmesseinrichtung (2) auf einer ersten der Anflanschflächen ein Gasmessverhüter (3) und/oder auf einer weiteren der Anflanschflächen ein Ventilblock (4) angeflanscht sind.

2. Vorrichtung nach Anspruch 1, **dadurch gekennzeichnet, dass** Einlass (2.3) und Auslass (2.4) zur bzw. aus der Messeinheit unter einem endlichen Winkel, insbesondere größer 0° und kleiner 180° , zueinander ausgerichtet sind.

3. Vorrichtung nach Anspruch 2, **dadurch gekennzeichnet, dass** der Winkel zwischen dem Einlas (2.3) und dem Auslass (2.4) zwischen 30° und 150°, insbesondere zwischen 60° und 120° , vorzugsweise zwischen 80° und 100° , beträgt.

4. Vorrichtung nach Anspruch 1 oder 2, **dadurch gekennzeichnet, dass** die Verbindungslinie zwischen den Achsen zweier Messräder unter einem endlichen Winkel ungleich 90° zum Einlass- (2.3) und/oder Auslass (2.4) zu bzw. von der Messeinheit ausgerichtet ist.

5. Vorrichtung nach Anspruch 4, **dadurch gekennzeichnet, dass** die Verbindungslinie der beiden Messräder unter einem Winkel zwischen 30° und 60°, vorzugsweise zwischen 40° und 50° zum Ein- und/oder Auslass ausgerichtet ist.

6. Vorrichtung nach einem der Ansprüche 1 bis 5, **dadurch gekennzeichnet, dass** Ein- und Auslass (2.3, 2.4) unter 90° zueinander verlaufen.

7. Vorrichtung nach einem der vorangehenden Ansprüche, **dadurch gekennzeichnet, dass** sie mindestens zwei im rechten Winkel zueinander stehenden Seitenflächen aufweist.

8. Vorrichtung nach den Ansprüchen 6 und 7, **dadurch gekennzeichnet, dass** der Einlass (2.3) und der Auslass (2.4), senkrecht, in jeweils eine Seitenfläche des Gehäuses (2a) münden.

9. Vorrichtung nach einem der vorangehenden Ansprüche, **dadurch gekennzeichnet, dass** das Gehäuse (2a) im Wesentlichen quaderförmig ausgebildet ist.

10. Vorrichtung nach einem der vorangehenden Ansprüche, **dadurch gekennzeichnet, dass** der Auslass (2.4) im Bereich seiner Mündung in eine Seitenwandung des Gehäuses (2a) erweitert ist und im Erweiterungsbereich eine Rückschlagklappe (2.6) angeordnet ist.

11. Vorrichtung nach einem der vorangehenden Ansprüche, **dadurch gekennzeichnet, dass** die Messräder (2.1, 2.2) Ovalräder sind, welche insbesondere miteinander kämmen.

12. Vorrichtung nach einem der Ansprüche 1 bis 10, **dadurch gekennzeichnet, dass** die Messeinheit einen Treibschieberzähler oder einen Ringkolbenzähler aufweist.

13. Vorrichtung nach einem der vorangehenden Ansprüche, **dadurch gekennzeichnet, dass** der Winkel zwischen den Anflanschflächen (3', 4') des Gehäuses (2a) zwischen 30° und 150° , insbesondere zwischen 60° und 120° , vorzugsweise zwischen 80° und 100°, beträgt.

14. Vorrichtung nach einem der vorangehenden Ansprüche, **dadurch gekennzeichnet, dass** eine Bodenplatte (3.1) eines Gehäuses eines Gasmessverhüters (3), auf der eine im Wesentlichen zylindrische Deckkappe (3.2) des Gasmessverhüters (3) befestigt ist, mit dem Gehäuse (2a) der Durchflussmesseinrichtung (2) verbunden ist.

15. Vorrichtung nach Anspruch 14, **dadurch gekennzeichnet, dass** die Deckkappe (3.2) auf der Bodenplatte (3.1) mittels Schrauben dicht befestigt ist.

16. Vorrichtung nach einem der vorangehenden Ansprüche, **dadurch gekennzeichnet, dass** der Gasmessverhüter (3) einen Siebfilter (3.4) aufweist.

17. Vorrichtung nach einem der vorangehenden Ansprüche, **dadurch gekennzeichnet, dass** der Gasmessverhüter (3) eine Schwimmereinrichtung (3.5) aufweist.

18. Vorrichtung nach einem der vorangehenden Ansprüche, **dadurch gekennzeichnet, dass** ein Ventilblock (5) unmittelbar am Gehäuse (2a) der Durchflussmesseinrichtung (2) befestigt ist.

19. Vorrichtung nach Anspruch 18, **dadurch gekennzeichnet, dass** der Ventilblock (4) vollständig von ihm zerstörungsfrei lösbare Ventileinheiten (4.4) trägt.

20. Vorrichtung nach Anspruch 19, **dadurch gekennzeichnet, dass** die Ventileinheit (4.4) mittels Schrauben an einer Abdeckplatte (4.3) des Ventilblocks (5) lösbar befestigt sind.

21. Vorrichtung nach einem der vorangehenden Ansprüche, **dadurch gekennzeichnet, dass** ferner wenigstens eine weitere Einrichtung, wie Sensoren, Widerstandsthermometer, Steuerungseinheiten oder dergleichen, unmittelbar am Gehäuse (2a) der Durchflussmesseinrichtung (2) befestigt ist.

22. Vorrichtung nach Anspruch 21, **dadurch gekennzeichnet, dass** die weitere Einrichtung an der von den Anflanschflächen (3', 4') verschiedenen, dritten Anflanschfläche befestigt ist.

23. Verwendung einer Vorrichtung nach einem der vorangehenden Ansprüche zum Einbau in Versorgungsfahrzeuge, insbesondere Tankfahrzeuge.

## Claims

1. Apparatus for the volumetric measurement of a flowing liquid having a volumetric throughflow measuring device (2) which has a housing (2a), **characterized**
- **in that** the housing (2a) has at least three flanging faces which are oriented with respect to one another at finite angles for further devices of the volumetric throughflow measuring device, and
- **in that**, directly on the housing of the volumetric throughflow measuring device (2), a degasser (3) is flange-connected on a first of the flanging faces and/or a valve block (4) is flange-connected on a further of the flanging faces.

2. Apparatus according to Claim 1, **characterized in that** the inlet (2.3) and outlet (2.4) to and from the measuring unit are oriented with respect to one another at a finite angle, in particular greater than 0° and smaller than 180°.

3. Apparatus according to Claim 2, **characterized in that** the angle between the inlet (2.3) and the outlet (2.4) is between 30° and 150°, in particular between 60° and 120°, preferably between 80° and 100°.

4. Apparatus according to Claim 1 or 2, **characterized in that** the connecting line between the axes of two measuring wheels is oriented at a finite angle not equal to 90° with respect to the inlet (2.3) and/or outlet (2.4) to and from the measuring unit.

5. Apparatus according to Claim 4, **characterized in that** the connecting line of the two measuring wheels is oriented at an angle between 30° and 60°, preferably between 40° and 50° with respect to the inlet and/or outlet.

6. Apparatus according to one of Claims 1 to 5, **characterized in that** the inlet and outlet (2.3, 2.4) run at 90° with respect to one another.

7. Apparatus according to one of the preceding claims, **characterized in that** it has at least two side faces which are at a right angle with respect to one another.

8. Apparatus according to Claims 6 and 7, **characterized in that** the inlet (2.3) and the outlet (2.4) open perpendicularly into in each case one side face of the housing (2a).

9. Apparatus according to one of the preceding claims, **characterized in that** the housing (2a) is of substantially cuboidal configuration.

10. Apparatus according to one of the preceding claims, **characterized in that** the outlet (2.4) is widened in the region of its opening into a side wall of the housing (2a) and a non-return flap (2.6) is arranged in the widening region.

11. Apparatus according to one of the preceding claims, **characterized in that** the measuring wheels (2.1, 2.2) are oval wheels which, in particular, mesh with one another.

12. Apparatus according to one of Claims 1 to 10, **characterized in that** the measuring unit has a flowmeter or a cylindrical piston meter.

13. Apparatus according to one of the preceding claims, **characterized in that** the angle between the flanging faces (3', 4') of the housing (2a) is between 30° and 150°, in particular between 60° and 120°, preferably between 80° and 100°.

14. Apparatus according to one of the preceding claims, **characterized in that** a base plate (3.1) of a housing of a degasser (3), on which base plate (3.1) a substantially cylindrical covering cap (3.2) of the degasser (3) is fastened, is connected to the housing (2a) of the throughflow measuring device (2).

15. Apparatus according to Claim 14, **characterized in that** the covering cap (3.2) is fastened sealingly on the base plate (3.1) by means of screws.

16. Apparatus according to one of the preceding claims, **characterized in that** the degasser (3) has a screen filter (3.4).

17. Apparatus according to one of the preceding claims, **characterized in that** the degasser (3) has a float device (3.5).

18. Apparatus according to one of the preceding claims, **characterized in that** a valve block (5) is fastened directly to the housing (2a) of the throughflow measuring device (2).

19. Apparatus according to Claim 18, **characterized in that** the valve block (4) supports valve units (4.4) which can be released completely from it in a nondestructive manner.

20. Apparatus according to Claim 19, **characterized in that** the valve unit (4.4) is fastened releasably by means of screws to a covering plate (4.3) of the valve block (5).

21. Apparatus according to one of the preceding claims, **characterized in that**, furthermore, at least one further device, such as sensors, resistance thermometers, control units or the like, is fastened directly to the housing (2a) of the throughflow measuring device (2).

22. Apparatus according to Claim 21, **characterized in that** the further device is fastened to the third flanging face which is different from the flanging faces (3', 4').

23. Use of an apparatus according to one of the preceding claims for installation in supply vehicles, in particular tanker vehicles.

## Revendications

1. Dispositif de mesure volumétrique d'un liquide fluide doté d'un dispositif de mesure de débit volumétrique (2) comportant un carter (2a), **caractérisé en ce que** :
- le carter (2a) comporte au moins trois surfaces de bridage orientées selon des angles finis les unes par rapport aux autres pour les autres dispositifs du dispositif de mesure de débit volumétrique ; et
- un système de protection de mesure de gaz (3) est bridé directement au carter du dispositif de mesure de débit volumétrique (2) sur une première surface des surfaces de bridage et/ou un bloc de soupape (4) est bridé sur une autre surface des surfaces de bridage.

2. Dispositif selon la revendication 1, **caractérisé en ce que** l'admission (2.3) et l'échappement (2.4) sont orientés l'un par rapport à l'autre en direction et/ou à destination de l'unité de mesure selon un angle fini, notamment supérieur à 0° et inférieur à 180°.

3. Dispositif selon la revendication 2, **caractérisé en ce que** l'angle entre l'admission (2.3) et l'échappement (2.4) est compris entre 30° et 150°, notamment entre 60° et 120°, de préférence entre 80° et 100°.

4. Dispositif selon la revendication 1 ou 2, **caractérisé en ce que** la ligne de jonction comprise entre les axes des deux volants de mesure est orientée selon un angle fini différent de 90° par rapport à l'admission (2.3) et/ou à l'échappement (2.4), à destination et/ou à partir de l'unité de mesure.

5. Dispositif selon la revendication 4, **caractérisé en ce que** la ligne de jonction des deux volants de mesure est orientée selon un angle compris entre 30° et 60°, de préférence entre 40° et 50°, par rapport à l'admission et/ou à l'échappement.

6. Dispositif selon l'une quelconque des revendications 1 à 5, **caractérisé en ce que** l'admission et l'échappement (2.3, 2.4) s'étendent à 90° l'un par rapport à l'autre.

7. Dispositif selon l'une quelconque des revendications précédentes, **caractérisé en ce qu'**il comporte au moins deux surfaces latérales placées à angle droit.

8. Dispositif selon les revendications 6 et 7, **caractérisé en ce que** l'admission (2.3) et l'échappement (2.4) débouchent perpendiculairement, respectivement dans une surface latérale du carter (2a).

9. Dispositif selon l'une quelconque des revendications précédentes, **caractérisé en ce que** le carter (2a) est réalisé pour l'essentiel en forme de parallélépipède rectangle.

10. Dispositif selon l'une quelconque des revendications précédentes, **caractérisé en ce que** l'échappement (2.4) s'élargit dans la région de son embouchure en une paroi latérale du carter (2a) et qu'un clapet de retenue (2.6) est disposé dans la région s'élargissant.

11. Dispositif selon l'une quelconque des revendications précédentes, **caractérisé en ce que** les volants de mesure (2.1, 2.2) sont des volants ovales s'engrenant notamment les uns dans les autres.

12. Dispositif selon l'une quelconque des revendications 1 à 10, **caractérisé en ce que** l'unité de mesure comporte un compteur de poussoir d'actionnement ou un compteur de piston annulaire.

13. Dispositif selon l'une quelconque des revendications précédentes, **caractérisé en ce que** l'angle mesuré entre les surfaces de bridage (3', 4') du carter (2a) est compris entre 30° et 150°, notamment entre 60° et 120°, de préférence entre 80° et 100°.

14. Dispositif selon l'une quelconque des revendications précédentes, **caractérisé en ce qu'**une plaque de fond (3.1) d'un carter d'un système de protection de mesure de gaz (3) sur laquelle est fixé un bouchon couvrant (3.2) pour l'essentiel cylindrique du système de protection de mesure de gaz (3) est reliée au carter (2a) du dispositif de mesure de débit (2).

15. Dispositif selon la revendication 14, **caractérisé en ce que** le bouchon couvrant (3.2) est fixé de façon étanche sur la plaque de fond (3.1) au moyen de vis.

16. Dispositif selon l'une quelconque des revendications précédentes, **caractérisé en ce que** le système de protection de mesure de gaz (3) comporte un filtre à tamis (3.4).

17. Dispositif selon l'une quelconque des revendications précédentes, **caractérisé en ce que** le système de protection de mesure de gaz (3) comporte un dispositif à flotteur (3.5).

18. Dispositif selon l'une quelconque des revendications précédentes, **caractérisé en ce qu'**un bloc de soupape (5) est directement fixé au carter (2a) du dispositif de mesure de débit (2).

19. Dispositif selon la revendication 18, **caractérisé en ce que** le bloc de soupape (4) supporte des unités de soupape (4.4) pouvant entièrement être retirées sans destruction par lui.

20. Dispositif selon la revendication 19, **caractérisé en ce que** l'unité de soupape (4.4) est fixée de façon amovible par le biais de vis à une plaque de recouvrement (4.3) du bloc de soupape (5).

21. Dispositif selon l'une quelconque des revendications précédentes, caractérisé en qu'en outre au moins un autre dispositif, prenant par exemple la forme de capteurs, de thermistances, d'unités de commande ou de leur équivalent, est directement fixé au carter (2a) du dispositif de mesure de débit (2).

22. Dispositif selon la revendication 21, **caractérisé en ce que** le dispositif supplémentaire est fixé à la troisième surface de bridage différant des surfaces de bridage (3' 4').

23. Utilisation d'un dispositif selon l'une quelconque des revendications précédentes à monter dans des véhicules ravitailleurs, notamment des véhicules à réservoir.
